# EUROPEAN PATENT APPLICATION

(11) **EP 3 133 527 A1**
(43) Date of publication of application: **22.02.2017**
(21) Application number: 16174462.8
(22) Date of filing: 14.06.2016
(51) Int. Cl.: G06K 9/00, G06K 9/32

(54) **HUMAN FACE RECOGNITION METHOD, APPARATUS AND TERMINAL**

(30) Priority: 21.08.2015 CN 201510520457
(71) Applicant: Xiaomi Inc., Beijing 100085 (CN)
(72) Inventor: CHEN, Zhijun, 100085 Haidian District (CN); WANG, Pingze, 100085 Haidian District (CN); QIN, Qiuping, 100085 Haidian District (CN)
(74) Representative: Sadler, Peter Frederick

(57) **Abstract**

A human face recognition method, a human face recognition apparatus and a terminal are provided. The method includes: adding a specified number of pixels to an edge area of the original image to acquire an image to be processed; performing human face recognition on the image to be processed; and determining a human face in the original image according to a result of the human face recognition.

## Description

### TECHNICAL FIELD

The present disclosure generally relates to the field of image processing technology, and more particularly, to a human face recognition method, and an apparatus and a terminal for performing human face recognition.

### BACKGROUND

Recently, human face recognition technology has been developing with higher and higher application value in the fields of security access control, visual detection, image retrieval based on contents and new generation human-machine interfaces. As a result, more attention is being paid by researchers into how to recognize human faces in an image.

In the related art, the human face may be recognized in accordance with a facial feature, such as taking a ratio of organs (such as, eyes, nose, etc.) on the human face as the facial feature. However, if the human face is located in the edge area of image, a profile with a ratio similar to that between organs on the face may not be found in such an image since the image does not contain the entire human face, thus a human face classifier may not recognize the human face.

### SUMMARY

The present disclosure provides, in embodiments, a human face recognition method and a human face recognition apparatus.

According to a first aspect of embodiments of the present disclosure, there is provided a human face recognition method, including:
adding a specified number of pixels to an edge area of the original image to acquire an image to be processed;
performing human face recognition on the image to be processed; and
determining a human face in the original image according to a result of the human face recognition.

Combining with the first aspect, in a first possible implementation of the first aspect, adding the specified number of pixels to an edge area of the original image includes:
acquiring a pixel value of each pixel in the edge area of the original image;
determining an edge area having a facial complexion pixel according to the pixel value of each pixel in the edge area and a preset pixel value for the facial complexion pixel; and
adding the specified number of pixels to the edge area having the facial complexion pixel.

Combining with the first aspect or the first possible implementation of the first aspect, in a second possible implementation of the first aspect, performing the human face recognition on the image to be processed includes:
acquiring a plurality of sub-images of the image to be processed; and
determining whether each sub-image is a human face sub-image using a pre-trained adaptive boost human face classifier.

Combining with the second possible implementation of the first aspect, in a third possible implementation of the first aspect, acquiring the plurality of sub-images of the image to be processed includes:
traversing the image to be processed for a plurality of times using sliding windows and defining an image area covered by the sliding window at every position of each traverse as one sub-image of the image to be processed, in which the sliding windows used in any two traverse are of different sizes; or
zooming the image to be processed for a plurality of times to acquire a plurality of images to be processed in different sizes, trimming an image to be processed in a size into a plurality of image areas in a specified size, and defining each image area in the specified size as a sub-image.

Combining with the second possible implementation of the first aspect, in a fourth possible implementation of the first aspect the pre-trained adaptive boost human face classifier is formed as a cascade of multistage of classifiers; and determining whether each sub-image is the human face sub-image using the pre-trained adaptive boost human face classifier includes:
determining whether the sub-image is the human face sub-image in a stage by stage manner starting from the first stage of classifier to the last stage of classifier in the pre-trained adaptive boost human face classifier; and
determining that the sub-image is the human face sub-image if each of results output from all stages of classifiers indicates that the sub-image is the human face sub-image.

Combining with the second possible implementation of the first aspect, in a fifth possible implementation of the first aspect, determining the human face in the original image according to the result of the human face recognition includes:
determining a position of a sub-image which is the human face sub-image in the original image, if the sub-image which is the human face sub-image exists in the plurality of sub-images of the image to be processed; and
determining the human face in the original image according to the position of the sub-image which is the human face sub-image in the original image.

According to a second aspect of embodiments of the present disclosure, there is provided a human face recognition apparatus, including:
an adding module, configured to add a specified number of pixels to an edge area of an original image to acquire an image to be processed;
a recognizing module, configured to perform human face recognition on the image to be processed acquired by the adding module; and
a determining module, configured to determine a human face in the original image according to a result of the human face recognition from the recognizing module.

Combining with the second aspect, in a first possible implementation of the second aspect, the adding module includes:
a first acquiring unit, configured to acquire a pixel value of each pixel in the edge area of the original image;
a first determining unit, configured to determine an edge area having a facial complexion pixel according to the pixel value of each pixel in the edge area acquired by the first acquiring unit and a preset pixel value for the facial complexion pixel; and
an adding unit, configured to add the specified number of pixels to the edge area having the facial complexion pixel determined by the first determining unit.

Combining with the second aspect or a first possible implementation of the second aspect, in a second possible implementation of the second aspect, the recognizing module includes:
a second acquiring unit, configured to acquire a plurality of sub-images of the image to be processed; and
a judging unit, configured to determine whether each sub-image acquired by the second acquiring unit is a human face sub-image using a pre-trained adaptive boost human face classifier.

Combining with the second possible implementation of the second aspect, in a third possible implementation of the second aspect, the second acquiring unit is configured to:
traverse the image to be processed for a plurality of times using sliding windows and define an image area covered by the sliding window at every position of each traverse as one sub-image of the image to be processed, in which the sliding windows used in any two traverses are of different sizes; or
zoom the image to be processed for a plurality of times to acquire a plurality of images to be processed in different sizes, trim an image to be processed in a size into a plurality of image areas in a specified size, and define each image area in the specified size as a sub-image.

Combining with the second possible implementation of the second aspect, in a fourth possible implementation of the second aspect the pre-trained adaptive boost human face classifier is formed as a cascade of multistage classifiers, and the judging unit is configured to:
determine whether the sub-image is the human face sub-image in a stage by stage manner starting from the first stage of classifier to the last stage of classifier in the pre-trained adaptive boost human face classifier; and
determine that the sub-image is the human face sub-image if each of results output from all stages of classifiers indicates that the sub-image is the human face sub-image.

Combining with the second possible implementation of the second aspect, in a fifth possible implementation of the second aspect the determining module includes:
a second determining unit, configured to determine a position of a sub-image which is the human face sub-image in the original image, if the sub-image which is the human face sub-image exists in the plurality of sub-images of the image to be processed; and
a third determining unit, configured to determine the human face in the original image according to the position of the sub-image which is the human face sub-image in the original image.

According to a third aspect of embodiments of the present disclosure, there is provided a terminal, including:
a processor; and
a memory for storing instructions executable by the processor;
in which the processor is configured to:
   add a specified number of pixels to an edge area of the original image to acquire an image to be processed;
   perform human face recognition on the image to be processed; and
   determine a human face in the original image according to a result of the human face recognition.

The solutions provided in embodiments of the present disclosure may have following beneficial effects.

After acquiring the image to be processed by adding the specified number of pixels to the edge area of the original image, the human face recognition is performed on the image to be processed so as to determine the human face in the original image. During the human face recognition, the edge area of the original image is added with a specified number of pixels, equivalent to extending the original image, such that the sub-image containing the human face may be found in the extended image if the human face is located in the edge area of the original image, thus ensuring that the human face located in the edge area of the original image can be recognized, and further improving the accuracy of recognizing the human face. Since partial faces within an image are difficult for recognition software to identify as human faces, adding pixels to the edge surprisingly helps to complete the partial face, improving the chances of recognition software successfully determining whether a human face exists in the digital image.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a human face recognition method according to an illustrative embodiment.
Fig. 2 is a flow chart showing a human face recognition method according to an illustrative embodiment.
Fig. 3 is a schematic diagram of an original image according to an illustrative embodiment.
Fig. 4 is a schematic diagram of an image to be processed according to an illustrative embodiment.
Fig. 5 is a schematic diagram of traversing an image to be processed using sliding windows in different sizes according to an illustrative embodiment.
Fig. 6 is a schematic diagram of images to be processed in different sizes according to an illustrative embodiment.
Fig. 7 is a schematic diagram of an Adaboost human face classifier according to an illustrative embodiment.
Fig. 8 is a block diagram of a human face recognition apparatus according to an illustrative embodiment.
Fig. 9 is a block diagram of an adding module according to an illustrative embodiment.
Fig. 10 is a block diagram of a recognizing module according to an illustrative embodiment.
Fig. 11 is a block diagram of a determining module according to an illustrative embodiment.
Fig. 12 is a block diagram of a terminal according to an illustrative embodiment.

### DETAILED DESCRIPTION

Reference will be made in detail to embodiments of the present disclosure. Unless specified or limited otherwise, the same or similar elements and the elements having same or similar functions are denoted by like reference numerals throughout the descriptions. The explanatory embodiments of the present disclosure and the illustrations thereof are not be construed to represent all the implementations consistent with the present disclosure. Instead, they are examples of the apparatus and method consistent with some aspects of the present disclosure, as described in the appended claims.

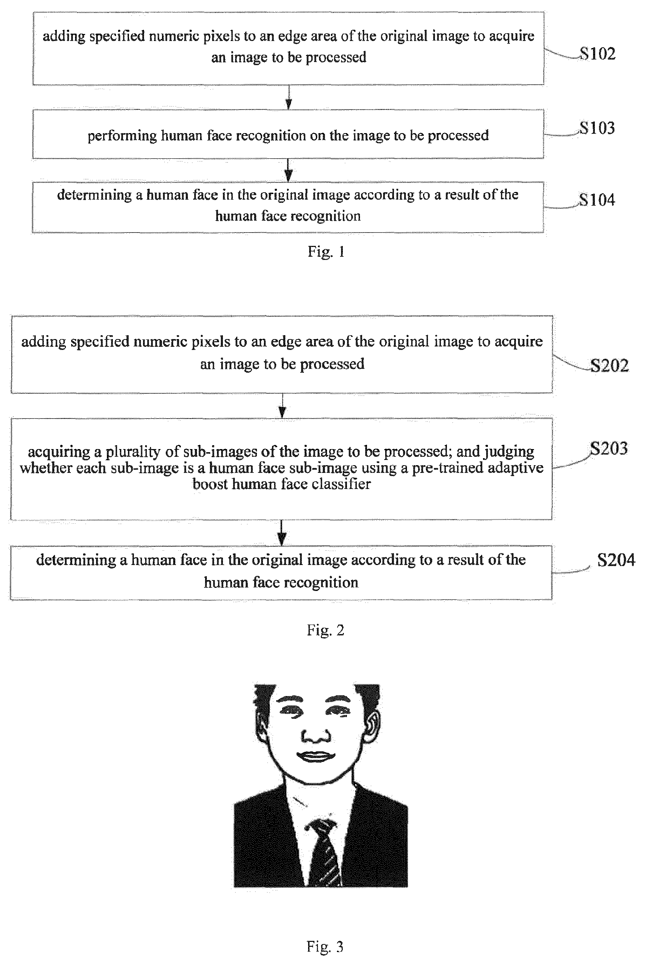

Fig. 1 is a flow chart showing a human face recognition method according to an illustrative embodiment, and the human face recognition method is applied in a terminal. As shown in Fig. 1, the human face recognition method provided in embodiments of the present disclosure includes the following steps S 102 to S104.

In step S102, a specified number of pixels are added to an edge area of an original image to acquire an image to be processed.

In step S103, human face recognition is performed on the image to be processed.

In step S104, a human face in the original image is determined according to a result of the human face recognition.

In an embodiment, the method may further include a step of acquiring the original image prior to the step S102.

With the method provided by the embodiments of the present disclosure, after acquiring the image to be processed by adding the specified number of pixels to the edge area of the original image, the human face recognition is performed on the image to be processed so as to determine the human face in the original image. During the human face recognition, the edge area of the original image is added with a specified number of pixels, equivalent to extending the original image, such that the sub-image containing the human face may be found in the extended image if the human face is located in the edge area of the original image, thus ensuring that the human face located in the edge area of the original image can be recognized, and further improving accuracy of recognizing the human face.

In another embodiment, adding the specified number of pixels to the edge area of the original image includes:
acquiring a pixel value of each pixel in the edge area of the original image;
determining an edge area having a facial complexion pixel according to the pixel value of each pixel in the edge area and a preset pixel value for the facial complexion pixel; and
adding the specified number of pixels to the edge area having the facial complexion pixel.

In another embodiment, performing the human face recognition on the image to be processed includes:
acquiring a plurality of sub-images of the image to be processed; and
determining whether each sub-image is a human face sub-image using a pre-trained adaptive boost human face classifier.

In another embodiment, acquiring the plurality of sub-images of the image to be processed includes:
traversing the image to be processed for a plurality of times using sliding windows and defining an image area covered by the sliding window at every position of each traverse as one sub-image of the image to be processed, in which the sliding windows used in any two traverses are of different sizes; or
zooming the image to be processed for a plurality of times to acquire a plurality of images to be processed in different sizes, trimming an image to be processed in a size into a plurality of image areas in a specified size, and defining each image area in the specified size as a sub-image.

In another embodiment, the pre-trained adaptive boost human face classifier is formed as a cascade of multistage classifiers in cascade, and determining whether each sub-image is the human face sub-image using the pre-trained adaptive boost human face classifier includes:
determining whether the sub-image is the human face sub-image in a stage by stage manner, starting from the first stage of classifier to the last stage of classifier in the pre-trained adaptive boost human face classifier; and
determining that the sub-image is the human face sub-image if each of results output from all stages of classifiers indicates that the sub-image is the human face sub-image.

In another embodiment, determining the human face in the original image according to the result of the human face recognition includes:
determining a position of a sub-image which is the human face sub-image in the original image, if the sub-image which is the human face sub-image exists in the plurality of sub-images of the image to be processed; and
determining the human face in the original image according to the position of the sub-image which is the human face sub-image in the original image.

Alternative embodiments of the present disclosure may be formed by combining alternative technical solutions above in any way, which will not be elaborated herein.

Fig. 2 is a flow chart showing a human face recognition method according to an illustrative embodiment, and the human face recognition method is applied in a terminal. As shown in Fig. 2, the human face recognition method provided by embodiments of the present disclosure includes the following steps S202 to S204.

Prior to preforming the step S202, an original image is acquired at first.

The original image is an image on which human face recognition needs to be performed. In embodiments of the present disclosure, it is required to recognize whether the original image contains a human face, and to recognize which area of the original image the human face is located in if the original image contains the human face.

There are many ways to acquire the original image. For example, an image read from any storage device may be used as the original image. Or an image downloaded from the Internet may be used as the original image. Also, the original image may be acquired by scanning an image with a scanner. Moreover, an image photographed by a camera may be used as the original image.

In step S202, a specified number of pixels are added to an edge area of the original image to acquire an image to be processed.

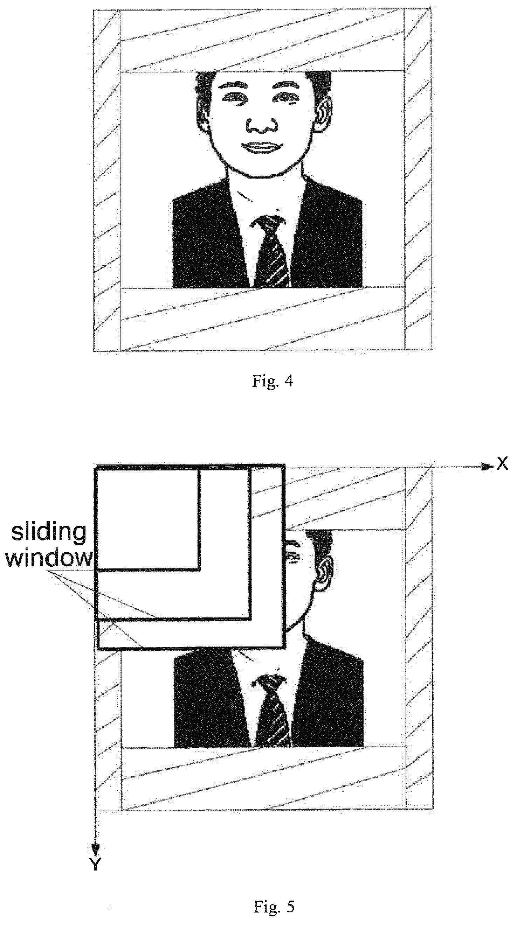

For instance, an edge area of the original image includes pixels at four outermost sides of each edge of the original image. As shown in Fig. 3, a schematic diagram of an original image is shown. The human face in Fig. 3 is located in the edge area of the original image because it extends over the edge. If the human face is located in the edge area of the original image, the human face may not be recognized by the human face recognition algorithm. In order to avoid this situation, in embodiments of the present disclosure, before applying the human face recognition method, the specified number of pixels are added to the edge area of the original image so as to acquire the image to be processed. As shown in Fig. 4, a schematic diagram of an image to be processed is shown. The image to be processed in Fig. 4 is acquired by adding pixels to the four edge areas of the original image shown in Fig. 3. The area with diagonals in Fig. 4 represents the added pixels.

The specified number of pixels is not limited in embodiments of the present disclosure, which may be set as needed in specific implementation. For example, two pixels, five pixels or ten pixels may be added to the periphery of each pixel at the outermost sides.

The pixels added to the edge area of the original image may themselves have a particular specified color value to match a human face. The specified color may be predetermined, for example based upon predefined options, or may be automatically recognized. The color value for the pixels may be based on any appropriate labelling, such as YUV space. As an example, for Asian faces, YUV values may be U [77-127], V [133-177].

Additionally, all the pixels added to the edge area of the original image may have the same pixel value, i.e., all the pixels are of the same color. The same color may be white, black or other colors, as mentioned above, and is not limited in embodiments of the present disclosure. Since pixels of the same color have the same pixel value, under the situation that the added pixels are pixels of the same color, if it is found that the pixels in a certain area of the image to be processed have the same pixel value when performing the human face recognition for the image to be processed, these pixels may be determined as the added pixels, such that it is unnecessary to execute too many recognition procedures, thus the speed of recognition is high.

For instance, when adding the specified number of pixels to the edge area of the original image, the specified number of pixels may be added to all of the four edge areas of the original image. Of course, the number of the specified number of pixels added to each edge area may be distinct. For example, the number of pixels added to the left edge area is different from that added to the right edge area. However, after adding pixels to the edge area of the original image, calculation for recognizing the image may be increased. In order to minimize the calculation for recognizing the image, before adding pixels to the edge area of the original image, the edge area in which the human face may be present is detected to determine where to add the pixels.

A facial complexion pixel is a pixel reproducing a portion of a human face; it may, for example, be a pixel included in a depiction of the human face in the digital image, or it may be a pixel having a pixel value the same, or similar, to human skin. In a possible implementation, since a pixel value for a facial complexion pixel is typically a specific value or within a certain value range, it may be determined whether the human face exists in the edge area by detecting whether the pixel value of each pixel in the edge area is the pixel value for the facial complexion pixel. Combining with contents of this part, the step of adding the specified number of pixels to the edge area of the original image includes, but is not limited to the following steps S2021-S2023.

In step S2021, a pixel value of each pixel in the edge area of the original image is acquired.

For instance, the pixel value of each pixel in the edge area may be acquired by determining a RGB value of each pixel. The determination of the RGB value of each pixel may be implemented by a color sensor, but is not limited thereto.

In step S2022, an edge area having a facial complexion pixel is determined according to the pixel value of each pixel in the edge area and a preset pixel value for the facial complexion pixel.

In a possible implementation, the pixel value of each pixel in the edge areas may be compared with the preset pixel value for the facial complexion pixel, and then the edge area having the facial complexion pixel may be determined according to the comparison.

For instance, when comparing the pixel value of any pixel in the edge areas with the preset pixel value for the facial complexion pixel, if a difference between the pixel value of this pixel and the preset pixel value for the facial complexion pixel is not greater than a first preset threshold, this pixel may be determined as a facial complexion pixel. Specific numeric value of the first preset threshold is not limited in embodiments of the present disclosure. However, in order to accurately recognize whether the pixel is the facial complexion pixel, the first preset threshold may be set to a small value.

For instance, when determining the edge area having the facial complexion pixel according to the comparison, for each edge area, it may be determined whether facial complexion pixel exists in the edge area according to a ratio of facial complexion pixel to all the pixels in the edge area. If the ratio is greater than a second preset threshold, it is determined that facial complexion pixel exists in the edge area, otherwise it is determined that the facial complexion pixel is absent in the edge area. Specific numeric value of the second preset threshold may be set as needed.

In step S2023, the specified number of pixels are added to the edge area having the facial complexion pixel.

In other words, when adding the pixels to edge area of the original image, the specified number of pixels may be only added to the edge area having the facial complexion pixel. For example, if the facial complexion pixel exists in the upper edge area of the original image, the specified number of pixels may be only added to the upper edge area, so as to reduce the calculation for recognizing the image.

In step S203, a plurality of sub-images of the image to be processed is acquired, and it is determined whether each sub-image is a human face sub-image using a pre-trained adaptive boost human face classifier.

This step is a specific implementation for performing human face recognition on the image to be processed. In embodiments of the present disclosure, the recognition of the human face may be implemented by firstly acquiring the plurality of sub-images of the image to be processed and then determining whether each sub-image is the human face sub-image.

Acquiring the plurality of sub-images of the image to be processed includes but is not limited to the following two ways.

First way: traversing the image to be processed for a plurality of times using sliding windows, defining an image area covered by the sliding windows at every position of each traverse as one sub-image of the image to be processed, in which the sliding windows used in any two traverses are of different sizes.

In other words, in embodiments of the present disclosure, the image to be processed is traversed by the sliding windows in different sizes, respectively. The size of the sliding window used for traversing the image to be processed each time may be various. For example, for a certain time of traversing the image to be processed, the size of sliding window is 3*3; while for the next time of traversing the image to be processed, the size of sliding window is 5*5, etc. As shown in Fig. 5, a schematic diagram of traversing an image to be processed using sliding windows in different sizes is shown. Each square in heavy line in Fig. 5 represents one sliding window.

When traversing the image to be processed using a sliding window in any size, the sliding window traverses the image to be processed by a specified step size in a horizontal direction (X direction) and a vertical direction (Y direction) of the image to be processed. As the sliding window moves one step size in the X direction or Y direction, it moves to a new position of the image to be processed. Each position defines one image range, which is the sub-image of the image to be processed. The specified step size may be one pixel, two pixels or the like.

Second way: zooming the image to be processed many times to acquire a plurality of image to be processed in different sizes, trimming an image to be processed in any size into a plurality of image areas of a specified size and defining each image area as a sub-image.

At each time that the image to be processed is zoomed, an image to be processed in one certain size may be acquired. For an image to be processed in one size, the image to be processed in such one size may be trimmed into a plurality of image areas. Each image area is of a specified size, such as 3*3 (pixel*pixel), 5*5 or the like.

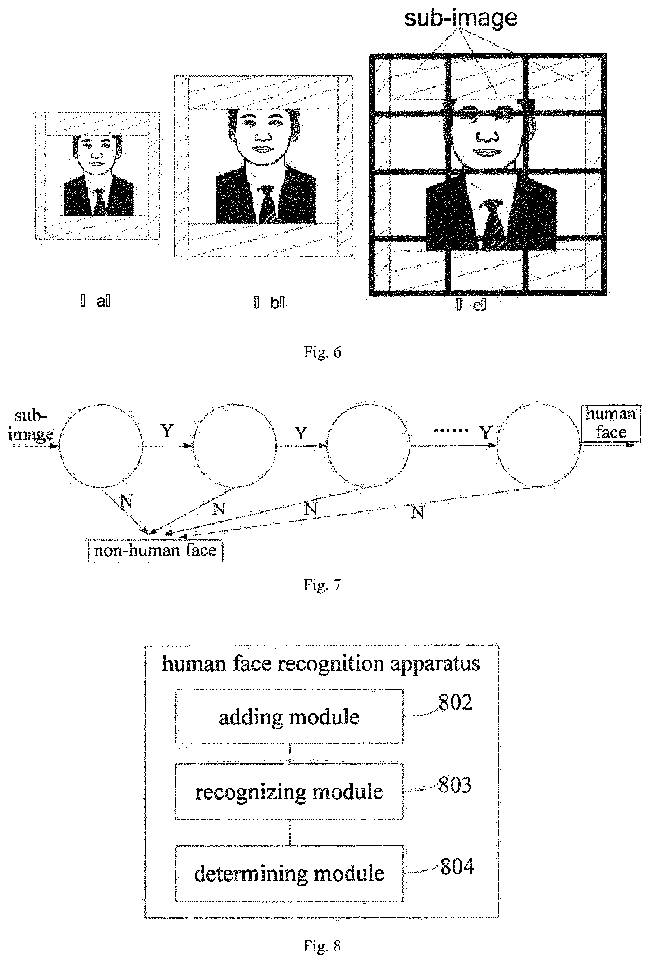

As shown in Fig. 6, a schematic diagram of image to be processed in different sizes is shown. Figs. (a)-(c) in Fig. 6 show images to be processed in a certain size respectively. As shown in Fig. (c) in Fig. 6, a schematic diagram of trimming an image to be processed in a certain size is shown. As shown in Fig. (c) in Fig. 6, each rectangle encircled with heavy line is a sub-image of the image to be processed in the certain size.

Further, determining whether each sub-image is a human face sub-image may be implemented by a pre-trained human face classifier. The type of pre-trained human face classifier may be various. For example, the pre-trained human face classifier may be a Support Vector Machine human face classifier, a neural network human face classifier or an adaptive boost (Adaboost) human face classifier or the like. For convenience of description, in embodiments of the present disclosure, the pre-trained human face classifier being Adaboost human face classifier is taken as an example to explain the sequent step of recognizing the human face.

In a possible implementation, in order to improve the precision of recognizing the human face, in embodiments of the present disclosure, the Adaboost human face classifier is formed as a cascade of multistage classifiers. Each stage of classifier in the Adaboost human face classifier is configured to determine whether the sub-image is the human face sub-image. The result output from each stage of classifier is "0" or "1". The output result is "1" indicates that the stage of classifier determines that the sub-image is the human face sub-image. The output result "0" indicates that the stage of classifier determines that the sub-image is not the human face sub-image.

Each stage of classifier in the Adaboost human face classifier is a strong classifier. Each strong classifier includes a plurality of weak classifiers. The training of each stage of classifier in the Adaboost human face classifier may be implemented by training the plurality of weak classifiers included in the stage of classifier. The result output from the stage of classifier is determined according to the data processing of all the weak classifiers included in the stage of classifier. Regarding the way of training the Adaboost human face classifier and the way of determining the result output from each stage of classifier, reference is made to the existing content about the Adaboost human face classifier, which is not elaborated in embodiments of the present disclosure.

The number of stages of the classifiers included in the Adaboost human face classifier is not limited in embodiments of the present disclosure. In order to enable the recognition to be more accurate, the Adaboost human face classifier may include much more stages of classifiers, such as five stages of classifiers, eight stages of classifiers. As shown in Fig. 7, a schematic diagram of an Adaboost human face classifier is shown. Each circle area in Fig. 7 represents one stage of classifier.

Based on this, when determining whether each sub-image is the human face sub-image using the pre-trained adaptive boost human face classifier, for any sub-image, it is trained in a stage by stage manner starting from the first stage of classifier to the last stage of classifier in the pre-trained Adaboost human face classifier, so as to determine whether the sub-image is the human face sub-image. If each of results output from all the stages of classifiers indicates that the sub-image is the human face sub-image, the sub-image is determined as the human face sub-image. If a result from any stage of classifier indicates that the sub-image is not the human face sub-image, the sub-image is determined as a non-human-face sub-image.

Specifically, for any sub-image, the sub-image is input into the Adaboost human face classifier from the first stage of classifier, if the first stage of classifier determines that the sub-image is the human face sub-image, the sub-image is input into the second stage of classifier, such that the second stage of classifier determines whether the sub-image is the human face sub-image, and so on, until the last stage of classifier. If the first stage of classifier determines that the sub-image is not the human face sub-image, the first stage of classifier acquires the next sub-image for recognition.

It should be noted that, based on the work principle of pre-trained human face classifier, if a human face is located in an edge area of the original image, the human face located in the edge area typically cannot be recognized. However, the human face can be recognized correctly when shielded. In embodiments of the present disclosure, the specified number of pixels are added to the edge area of the original image, so that the human face located in the edge area is shielded by the added pixels, such that the human face located in the edge area may be recognized by the pre-trained human face classifier, thus improving the accuracy of recognizing the human face located in the edge area.

In step S204, a human face in the original image is determined according to a result of the human face recognition.

After recognizing whether each sub-image is the human face sub-image, the sub-image belonging to the human face may be determined according to the result of the human face recognition. However, in order to determine which area is the human face in the original image located in, it is required to determine the human face in the original image according to the sub-image belonging to the human face.

For instance, a step of determining the human face in the original image according to the result of the human face recognition includes, but is not limited to: determining a position of the sub-image which is a human face sub-image in the original image if the sub-image which is a human face sub-image exists in the plurality of sub-images of the image to be processed, and then determining the human face in the original image according to the position of the sub-image which is a human face sub-image in the original image.

In a possible implementation, for any sub-image whose recognition indicates that it is the human face sub-image, when acquiring the position of the sub-image in the original image, a pixel value of each pixel in the sub-image is extracted, and a pixel value of each pixel in the original image is extracted, and then the pixel value of each pixel in the sub-image is compared with the pixel value of each pixel in the original image. If the pixel value of each pixel in one certain area of the original image is equal to the pixel value of each pixel in the sub-image, the position of the sub-image may be positioned in the original image. After positioning the position of the sub-image in the original image, the human face in the original image may be determined.

Further, if the sub-image which is a human face sub-image does not exist in the plurality of sub-images of the image to be processed, it is determined that the original image does not contain the human face.

With the method provided by embodiments of the present disclosure, after acquiring the image to be processed by adding the specified number of pixels to the edge area of the original image, the human face recognition is performed on the image to be processed so as to determine the human face in the original image. During the human face recognition, the edge area of the original image is added with the specified number of pixels, equivalent to extending the original image, such that the sub-image containing the human face may be found in the extended image if the a human face is located in the edge area of the original image, thus ensuring that the human face located in the edge area of the original image can be recognized, and further improving accuracy of recognizing the human face.

Fig. 8 is a block diagram of a human face recognition apparatus according to an illustrative embodiment. Referring to Fig. 8, the human face recognition apparatus includes an adding module 802, a recognizing module 803 and a determining module 804.

The adding module 802 is configured to add a specified number of pixels to an edge area of an original image to acquire an image to be processed.

The recognizing module 803 is configured to perform human face recognition on the image to be processed acquired by the adding module 802.

The determining module 804 is configured to determine a human face in the original image according to a result of the human face recognition from the recognizing module 803.

In an embodiment, the human face recognition apparatus may further include an acquiring module configured to acquire the original image.

With the apparatus provided by embodiments of the present disclosure, after acquiring the image to be processed by adding the specified number of pixels to the edge area of the original image, the human face recognition is performed on the image to be processed so as to determine the human face in the original image. During the human face recognition, the edge area of the original image is added with a specified number of pixels, equivalent to extending the original image, such that the sub-image containing the human face may be found in the extended image if the human face is located in the edge area of the original image, thus ensuring that the human face located in the edge area of the original image can be recognized, and further improving accuracy of recognizing the human face.

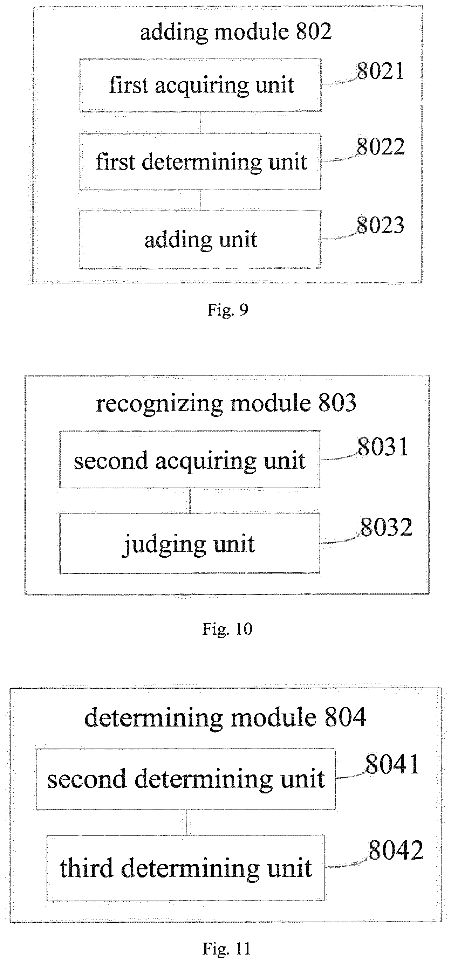

In another embodiment, referring to Fig. 9, the adding module 802 includes a first acquiring unit 8021, a first determining unit 8022 and an adding unit 8023.

The first acquiring unit 8021 is configured to acquire a pixel value of each pixel in the edge area of the original image.

The first determining unit 8022 is configured to determine an edge area having a facial complexion pixel according to the pixel value of each pixel in the edge area acquired by the first acquiring unit 8021 and a preset pixel value for the facial complexion pixel.

The adding unit 8023 is configured to add the specified number of pixels to the edge area having the facial complexion pixel determined by the first determining unit 8022.

In another embodiment, referring to Fig. 10, the recognizing module 803 includes a second acquiring unit 8031 and a judging unit 8032.

The second acquiring unit 8031 is configured to acquire a plurality of sub-images of the image to be processed.

The judging unit 8032 is configured to determine whether each sub-image acquired by the second acquiring unit 8031 is a human face sub-image using a pre-trained adaptive boost human face classifier.

In another embodiment, the second acquiring unit 8031 is configured to traverse the image to be processed for a plurality of times using sliding windows and define an image area covered by the sliding window at every position of each traverse as one sub-image of the image to be processed, in which the sliding windows used in any two traverses are of different sizes; or zoom the image to be processed for a plurality of times to acquire a plurality of images to be processed in different sizes, trim an image to be processed in a size into a plurality of image areas in a specified size, and define each image area in the specified size as a sub-image.

In another embodiment, the pre-trained adaptive boost human face classifier is formed of a plurality as a cascade of multistage classifiers, and the judging unit 8032 is configured to: determine whether the sub-image is the human face sub-image in a stage by stage manner starting from the first stage of classifier to the last stage of classifier in the pre-trained adaptive boost human face classifier; and determine that the sub-image is the human face sub-image if each of results output from all stages of classifiers indicates that the sub-image is the human face sub-image.

In another embodiment, referring to Fig. 11, the determining module 804 includes: a second determining unit 8041 and a third determining unit 8042.

The second determining unit 8041 is configured to determine a position of a sub-image which is the human face sub-image in the original image, if the sub-image which is the human face sub-image exists in the plurality of sub-images of the image to be processed.

The third determining unit 8042 is configured to determine the human face in the original image according to the position of the sub-image which is the human face sub-image in the original image.

With respect to the apparatus in the above embodiments, the specific manners for performing operations for individual modules therein have been described in detail in the embodiments regarding the human face recognition method, which will not be elaborated herein. Alternative embodiments of the present disclosure may be formed by combining alternative technical solutions above in any way, which will not be elaborated herein.

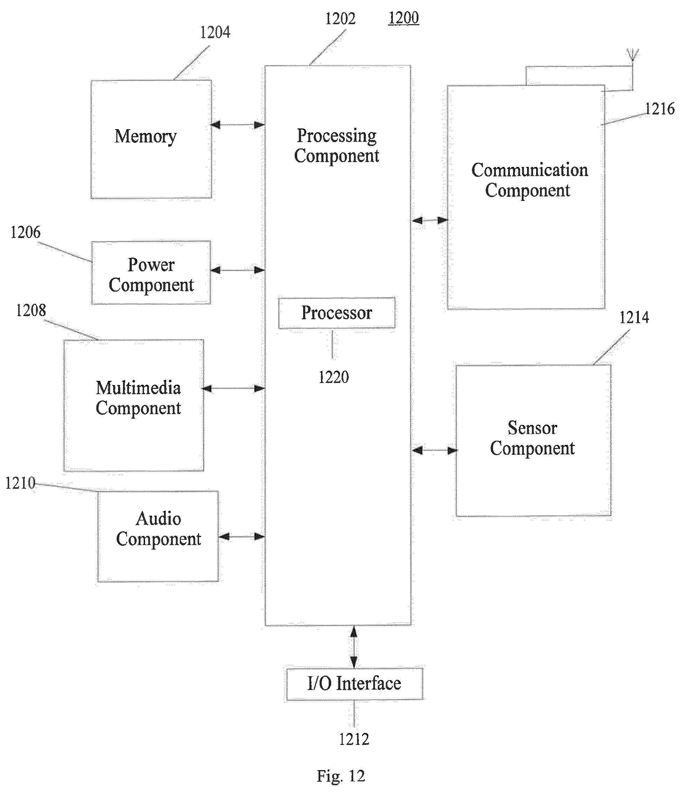

Fig. 12 is a block diagram of a terminal 1200 according to an illustrative embodiment, and the terminal is configured to execute the human face recognition method provided in embodiments corresponding to Fig. 1 or 2. For example, the terminal 1200 may be a mobile phone, a computer, a digital broadcast terminal, a messaging device, a gaming console, a tablet, a medical device, exercise equipment, a personal digital assistant, and the like.

Referring to Fig. 12, the terminal 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the terminal 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the terminal 1200. Examples of such data include instructions for any applications or methods operated on the terminal 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the terminal 1200. The power component 1206 may include a power management system, one or more power sources, and any other components associated with the generation, management, and distribution of power in the terminal 1200.

The multimedia component 1208 includes a screen providing an output interface between the terminal 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the terminal 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the terminal 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the terminal 1200. For instance, the sensor component 1214 may detect an open/closed status of the terminal 1200, relative positioning of components, e.g., the display and the keypad, of the terminal 1200, a change in position of the terminal 1200 or a component of the terminal 1200, a presence or absence of user contact with the terminal 1200, an orientation or an acceleration/deceleration of the terminal 1200, and a change in temperature of the terminal 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the terminal 1200 and other devices. The terminal 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the human face recognition method provided by embodiments corresponding to Fig. 1 and Fig. 2.

In illustrative embodiments, there is also provided a non-transitory computer-readable storage medium including instructions, such as a memory 1204 including instructions, the instructions may be executable by the processor 1220 in the terminal 1200, for performing the above-described methods. For example, the non-transitory computer-readable storage medium may be a ROM, a RAM, a CD-ROM, a magnetic tape, a floppy disc, an optical data storage device, and the like.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of the invention as defined in the claims.

## Claims

1. A human face recognition method, comprising:
adding (S 102) a specified number of pixels to an edge area of an original image, to extend the original image, to acquire an image to be processed;
performing (S103) human face recognition on the image to be processed; and
determining (S104) a human face in the original image according to a result of the human face recognition.

2. The method according to claim 1, wherein adding the specified number of pixels to the edge area of the original image comprises:
acquiring a pixel value of each pixel in the edge area of the original image;
determining an edge area having a facial complexion pixel according to the pixel value of each pixel in the edge area and a preset pixel value for the facial complexion pixel; and
adding the specified number of pixels to the edge area having the facial complexion pixel to extend the original image.

3. The method according to claim 1 or 2, wherein performing the human face recognition on the image to be processed comprises:
acquiring a plurality of sub-images of the image to be processed; and
determining whether each sub-image is a human face sub-image using a pre-trained adaptive boost human face classifier.

4. The method according to claim 3, wherein acquiring the plurality of sub-images of the image to be processed comprises:
traversing the image to be processed a plurality of times using sliding windows and defining an image area covered by the sliding window at every position of each traverse as one sub-image of the image to be processed, wherein the sliding windows used in any two traverses are of different sizes; or
zooming the image to be processed a plurality of times to acquire a plurality of images to be processed of different sizes, trimming an image to be processed of a particular size into a plurality of image areas of a specified size, and defining each image area in the specified size as a sub-image.

5. The method according to claim 3 or 4, wherein the pre-trained adaptive boost human face classifier is formed as a cascade of multistage classifiers, and determining whether each sub-image is the human face sub-image using the pre-trained adaptive boost human face classifier comprises:
determining whether the sub-image is a human face sub-image in a stage by stage manner starting from the first stage classifier to the last stage classifier in the pre-trained adaptive boost human face classifier; and
determining that the sub-image is the human face sub-image if each of the results output from all stages of the classifiers indicates that the sub-image is the human face sub-image.

6. The method according to any one of claims 3 to 5, wherein determining the human face in the original image according to the result of the human face recognition comprises:
determining a position of a sub-image which is a human face sub-image in the original image if the sub-image which is a human face sub-image exists in the plurality of sub-images of the image to be processed; and
determining the human face in the original image according to the position of the sub-image which is a human face sub-image in the original image.

7. The method according to any preceding claim wherein the pixels added to the edge area of the original image have a specified color value to match a human face.

8. A human face recognition apparatus, comprising:
an adding module (802), configured to add a specified number of pixels to an edge area of an original image to acquire an image to be processed;
a recognizing module (803), configured to perform human face recognition on the image to be processed acquired by the adding module; and
a determining module (804), configured to determine a human face in the original image according to a result of the human face recognition from the recognizing module.

9. The apparatus according to claim 8, wherein the adding module comprises:
a first acquiring unit, configured to acquire a pixel value of each pixel in the edge area of the original image;
a first determining unit, configured to determine an edge area having a facial complexion pixel according to the pixel value of each pixel in the edge area acquired by the first acquiring unit and a preset pixel value for the facial complexion pixel; and
an adding unit, configured to add the specified number of pixels to the edge area having the facial complexion pixel determined by the first determining unit.

10. The apparatus according to claim 8 or 9, wherein the recognizing module comprises:
a second acquiring unit, configured to acquire a plurality of sub-images of the image to be processed; and
a judging unit, configured to determine whether each sub-image acquired by the second acquiring unit is a human face sub-image using a pre-trained adaptive boost human face classifier.

11. The apparatus according to claim 10, wherein the second acquiring unit is configured to:
traverse the image to be processed for a plurality of times using sliding windows and define an image area covered by the sliding window at every position of each traverse as one sub-image of the image to be processed, wherein the sliding windows used in any two traverses are of different sizes; or
zoom the image to be processed for a plurality of times to acquire a plurality of images to be processed in different sizes, trim an image to be processed in a size into a plurality of image areas in a specified size, and define each image area in the specified size as a sub-image.

12. The apparatus according to claim 9 or 10, wherein the pre-trained adaptive boost human face classifier is formed as a cascade of multistage classifiers, and the judging unit is configured to:
determine whether the sub-image is the human face sub-image in a stage by stage manner starting from the first stage of classifier to the last stage of classifier in the pre-trained adaptive boost human face classifier; and
determine that the sub-image is the human face sub-image if each of results output from all stages of classifiers indicates that the sub-image is the human face sub-image.

13. The apparatus according to any one of claims 10 to 12, wherein the determining module comprises:
a second determining unit, configured to determine a position of a sub-image which is the human face sub-image in the original image, if the sub-image which is the human face sub-image exists in the plurality of sub-images of the image to be processed; and
a third determining unit, configured to determine the human face in the original image according to the position of the sub-image which is the human face sub-image in the original image.

14. A terminal, comprising:
a processor (1220); and
a memory (1204) for storing instructions executable by the processor;
wherein the processor is configured to carry out the method of any of claims 1 to 6.

15. A computer program including instructions that when executed cause a computer to carry out the human face recognition method according to any one of claims 1 to 7.
